# EUROPEAN PATENT APPLICATION

(11) **EP 4 656 455 A2**
(43) Date of publication of application: **03.12.2025**
(21) Application number: 25177967.4
(22) Date of filing: 21.05.2025
(51) Int. Cl.: B60N 2/58, B60N 2/70

(54) **SEAT ASSEMBLY AND METHOD OF MANUFACTURE**

(30) Priority: 30.05.2024 US 202418678572; 09.08.2024 DK PA202470212
(71) Applicant: Lear Corporation, Southfield, MI 48033 (US)
(72) Inventor: Duncan, Bradley C., Harrison Twp., MI, 48045 (US); Johnson, Christopher D., Novi, MI, 48377 (US); Swikoski, Lisa, West Bloomfield, MI, 48324 (US); Hale, David, Northville, MI, 48168 (US)
(74) Representative: Grünecker Patent- und Rechtsanwälte PartG mbB

(57) **Abstract**

A product includes a mesh member and a structural framework. The mesh member comprises a set of filaments of polymeric material, wherein at least two members of the set of filaments are looped and bonded to each other. The structural framework is embedded within the mesh member. A stiffness of the structural framework is greater than a stiffness of the mesh member.

## Description

### TECHNICAL FIELD

This relates to seat assembly having a cushion comprising a filament mesh structure and a method of manufacture.

### BRIEF DESCRIPTION OF THE DRAWINGS

Figure 1 is a perspective view of an example of a seat assembly including a filament mesh structure;
Figure 2 is schematic view of an example of a manufacturing system for making the filament mesh structure;
Figure 3A is an exploded view of examples of a trim cover and a cushion, the cushion comprising a filament mesh structure;
Figure 3B is a magnified view of area 3B from Figure 3A;
Figure 4 is an exploded perspective view of the filament mesh structure including a structural framework;
Figure 5 is a bottom view of the filament mesh structure including the structural framework;
Figure 6 is a cross-sectional view of the filament mesh structure illustrating an attachment between the trim cover and the structural framework;
Figure 7 is portion of the filament mesh structure illustrating an alternative attachment between the trim cover and the structural framework; and
Figure 8 is a flowchart of a method for producing a portion of the seat assembly including the filament mesh structure, the structural framework, and the trim cover.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It is to be understood that the disclosed embodiments are merely exemplary and that various and alternative forms are possible. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ embodiments according to the disclosure.

"One or more" includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a" and "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising" when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

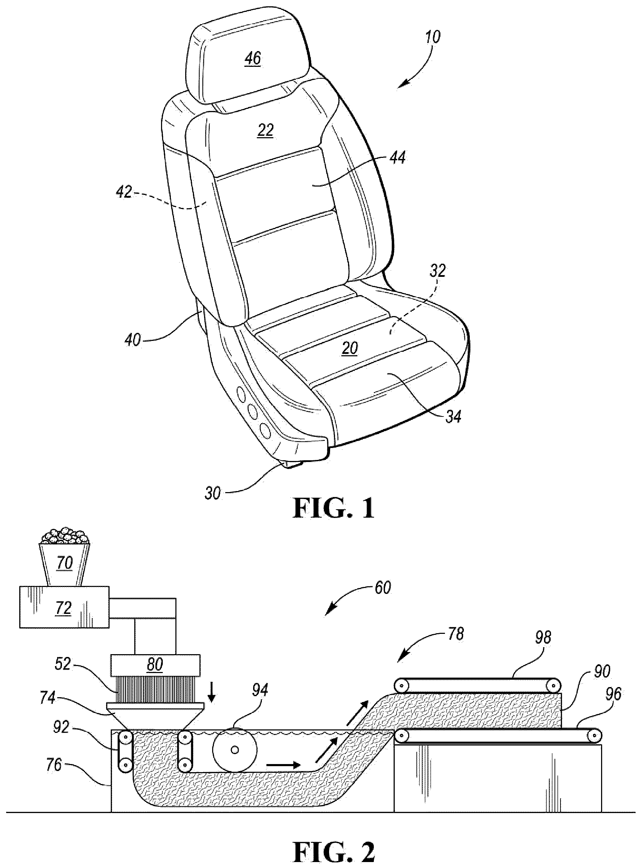

Referring to Figure 1, an example of a seat assembly 10 is shown. In some embodiments, the seat assembly 10 is a vehicle seat assembly, such as for a land vehicle like a car, truck, bus, or the like, or for a non-land vehicle like aircraft or watercraft. For example, a seat assembly 10 for a land vehicle may be shaped and sized as a front row driver or passenger seat, a second, third, or other rear row seat, and may include bucket-style seats as shown, bench-style seats, or other seat styles. Furthermore, the seat assembly 10 may be a non-stowable seat or a stowable seat that may be foldable and stowable in a cavity in the vehicle floor. Additionally, the seat assembly 10 may be configured for non-vehicle applications such as furniture.

In the configuration shown in Figure 1, the seat assembly 10 includes a seat bottom 20 and a seat back 22. It is contemplated that the seat back 22 may be omitted in some configurations, such as when the seat assembly 10 is configured as a motorcycle seat or stool.

The seat bottom 20 is configured to receive a seated occupant and support the pelvis and thighs of the seat occupant. The seat bottom 20 includes a seat bottom frame 30, a cushion 32, and a trim cover 34.

The seat bottom frame 30 is a structure that supports the cushion 32. The seat bottom frame 30 includes one or more structural members and may be made of any suitable material, such as a metal alloy, polymeric material, fiber reinforced polymeric material, or combinations thereof. In some configurations, the seat bottom frame 30 includes a panel, seat pan, suspension mat, or suspension wires upon which the cushion 32 is disposed.

The cushion 32 is disposed on the seat bottom frame 30. The cushion 32 is made of a compliant material that supports the seat occupant and distributes load forces from the seat occupant to the seat bottom frame 30. The cushion 32 and associated methods of manufacture will be discussed in more detail below.

The trim cover 34 covers at least a portion of the cushion 32. In addition, the trim cover 34 provides one or more visible exterior surfaces of the seat back 22. The seat occupant may be disposed on the trim cover 34 when seated upon the seat assembly 10. The trim cover 34 is made of any suitable material or materials, such as fabric, leather, leatherette, vinyl, or combinations thereof. The trim cover 34 may include a plurality of trim panels that are assembled in any suitable manner, such as by fusing or stitching. The trim cover 34 is attached to the seat bottom frame 30, the cushion 32, or both. For example, the trim cover 34 may include trim attachment features that are attached to the seat bottom frame 30, the cushion 32, or both, to inhibit removal of the trim cover 34 and help conform the trim cover 34 to the contour of the seat bottom frame 30, the cushion 32, or both. The trim cover 34 may also be attached to an attachment pad as will be discussed in more detail below.

The seat back 22 is configured to support the back of a seated occupant. The seat back 22 is disposed adjacent to the seat bottom 20. For example, the seat back 22 may be disposed above the seat bottom 20 and near the rear side of the seat bottom 20. The seat back 22 extends in a generally upward direction away from the seat bottom 20. In some configurations, the seat back 22 is mounted to the seat bottom 20 and may be pivotable with respect to the seat bottom 20. In other configurations, the seat back 22 is not mounted to the seat bottom 20. For instance, a vehicle seat back may be mounted to the vehicle body structure, such as in some second row seat assemblies. The seat back 22 includes a seat back frame 40, a cushion 42, a trim cover 44, and optionally a head restraint 46.

The seat back frame 40 is a structure that supports the cushion 42. The seat back frame 40 includes one or more structural members and may be made of any suitable material, such as a metal alloy, polymeric material, fiber reinforced polymeric material, or combinations thereof. In some configurations, the seat back frame 40 includes a panel, pan, suspension mat, or suspension wires upon which the cushion 42 is disposed. It is also contemplated that the seat back frame 40 may be integrally formed with the seat bottom frame 30 in some configurations.

The cushion 42 is disposed on the seat back frame 40. The cushion 42 is made of a compliant material that supports the seat occupant and distributes load forces from the seat occupant to the seat back frame 40. It is contemplated that the cushion 42 may be integrally formed with the cushion 32 of the seat bottom 20 or may be separate from the cushion 32 of the seat bottom 20. The cushion 42 and associated methods of manufacture will be discussed in more detail below.

The trim cover 44 covers at least a portion of the cushion 42. In addition, the trim cover 44 provides one or more visible exterior surfaces of the seat back 22. The seat occupant may be disposed on the trim cover 44 when seated upon the seat assembly 10. The trim cover 44 is made of any suitable material or materials, such as fabric, leather, leatherette, vinyl, or combinations thereof. The trim cover 44 may include one trim panel or a plurality of trim panels that are assembled in any suitable manner, such as by fusing or stitching. The trim cover 44 is attached to the seat back frame 40, the cushion 42, or both. For example, the trim cover 44 may include trim attachment features that are attached to the seat back frame 40, the cushion 42, or both, to inhibit removal of the trim cover 44 and help conform the trim cover 44 to the contour of the seat back frame 40, the cushion 42, or both. The trim cover 44 may also be attached to an attachment pad as will be discussed in more detail below.

The head restraint 46, if provided, is configured to support the head of a seat occupant. The head restraint 46 is disposed at the top of the seat back 22 or at an end of the seat back 22 that is disposed opposite the seat bottom 20. The head restraint 46 may be moveable in one or more directions with respect to the seat back 22 or may be integrally formed with the seat back 22.

Referring to Figure 2, the material supply 70 holds material stock that is to be extruded, such as solid beads, flakes, granules, pellets, or powder made of the material. In some configurations, the material supply 70 is configured as a container or hopper. The material supply 70 provides material stock to the extruder 72.

The extruder 72 melts the material stock and extrudes the material stock into a set of filaments 52. The extruder 72 may have any suitable configuration. In some configurations, the extruder 72 includes a barrel that receives a rotatable screw and heating elements. Rotation of the screw forces the material to move through the barrel and helps heat the material due to the friction generated as the screw rotates. The material exits the barrel under pressure and in a molten state and is transported under pressure to a die 80 of the extruder 72.

The die 80, which may also be referred to as a die plate or extrusion die, has multiple through holes or filament forming openings through which the molten material passes. A single filament 52 is extruded from each through hole. The filaments 52 fall downward from the die 80 under the force of gravity into the funnel 74.

The funnel 74 consolidates or groups the filaments 52 into a more compact arrangement in which the filaments bend, curl, or loop and a filament 52 contacts and bonds to at least one other filament 52. The funnel 74 has an inlet opening or funnel inlet and an outlet opening or funnel outlet that is smaller than the funnel inlet. Individual separated filaments 52 enter the funnel inlet. The filaments 52 bend, curl, or loop and move into contact as they accumulate. The filaments 52 move through the funnel 74 toward the funnel outlet. Some filaments may slide along the funnel 74 or an intervening sheet that is disposed on the funnel 74 as the filaments move toward the funnel outlet. Bonds are formed between filaments 52 at the points of contact while openings or voids between filaments 52 are present at other locations where one filament 52 does not contact or bond to another filament 52. The entangled and bonded filaments 52 pass through the funnel outlet of the funnel 74 and enter the cooling tank 76. For convenience in reference, the bonded filaments 52 are referred to as a mesh member or a filament mesh structure 90.

The cooling tank 76 holds a liquid, such as water or a mixture of water and another fluid. The liquid in the cooling tank 76 helps support the entangled and bonded filaments 52 to limit further compacting or consolidation of the filaments 52 into a less open or less porous arrangement and maintains a desired porosity and density of the filament mesh structure 90. Thus, the liquid provides some buoyancy or resistance that can result in additional bending, curling, or looping of the filaments 52 adjacent to the surface of the liquid or within the funnel 74 to further build the filament mesh structure 90. The liquid also cools the filaments 52 when the filaments 52 are in the liquid. For instance, the liquid cools the filaments 52 from the outside to solidify the filaments 52 and prevent the filaments 52 from bonding at additional locations. At this point, the filaments 52 are relatively stiff and no longer in a plastic state and thus generally maintain a shape and are not moldable or reformable without being reheated.

The material handling subsystem 78 transports the filament mesh structure 90 through the cooling tank 76. The material handling subsystem 78 includes various rollers and conveyors that help move the filament mesh structure 90 through the liquid and out of the liquid. In some configurations, a tractor conveyor 92 is provided in the cooling tank 76 to help pull the filament mesh structure 90 away from the funnel 74 and to counter buoyancy of the filaments 52.

One or more other rollers, such as roller 94, keep the filament mesh structure 90 submerged in the liquid and guide the filament mesh structure 90 through the cooling tank 76. For example, the roller 94 may guide the filament mesh structure 90 toward a conveyor belt 96 and shaker table 98 that are disposed outside of the cooling tank 76. The shaker table 98 shakes the filament mesh structure 90 while it is on the conveyor belt 96 to remove liquid. Alternatively or in addition, the filament mesh structure 90 may be squeezed to remove liquid, air may be blown toward the filament mesh structure 90 to help remove liquid from the filament mesh structure 90, or both. It is also contemplated that the filament mesh structure 90 may also be allowed to drip dry, or dry in ambient air.

The manufacturing system 60 described above is a continuous flow process in which the filament mesh structure 90 is formed as a continuous structure when filament extrusion is not interrupted. Further processing of the filament mesh structure 90 is provided after exiting the cooling tank 76 to cut the filament mesh structure 90 into individual pieces or blanks for individual cushions. Such processing is conducted by a cutting subsystem of the manufacturing system 60. The cutting system may be of any suitable type. For instance, the cutting system may employ a blade, knife, hot knife, saw, fluid jet, or the like to cut the filaments 52 of the filament mesh structure 90 into a blank. The cutting system may be used to shape or contour the blank. It is also contemplated that a blank may be further shaped or contoured with other manufacturing processes, such as molding of the entire blank or a portion thereof.

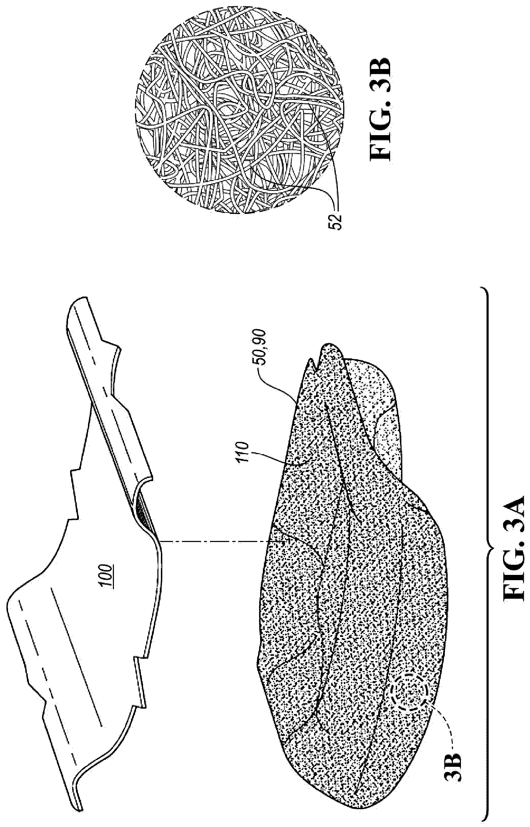

Referring to Figures 3A and 3B, an example of a cushion 50 is shown. The cushion in generically designated with reference number 50 for convenience in reference. It is to be understood that the structure and description of the cushion 50 is applicable to the cushion 32 of the seat bottom 20, the cushion 42 of the seat back 22, or both.

The cushion 50 is a non-foam component or includes at least one non-foam component. The non-foam component is primarily referred to as a mesh member but may also be referred to as a stranded member, looped member, entangled member, filament mesh structure, mesh structure, stranded mesh, looped mesh, entangled mesh, or mesh cushion. The cushion 50 is described below in the context of a cushion 50 that does not include foam material. In this context, the cushion 50 is made of filaments 52 of polymeric material that are randomly looped, bent, curled, or entangled and are bonded together. A filament 52 is directed bonded to another filament 52 rather than being indirectly bonded with a resin or other intermediate material.

The filaments 52, which may also be referred to as strands or threads, are made of any suitable material or materials. In some configurations, the filaments 52 are made of a polymeric material or thermoplastic material, such as a thermoplastic resin that is polyamide-based, polyester-based, polyimide-based, polyolefin-based (e.g., polypropylene-based, polyethylene-based, etc.), polystyrene-based, or combinations thereof. As one example, a polyethylene-based filament may be made of linear low-density polyethylene (LLPDE). The filament material may be recyclable unlike foam material or more easily recycled than foam material. It is also contemplated that a filament 52 may comprise reinforcement fibers and that the reinforcement fibers may not be made of a thermoplastic material.

In some configurations, a filament 52 may be a monofilament that is made of a single material. In some configurations, a filament 52 is made of multiple materials. As an example, a filament 52 made of multiple materials may include a core that is made of a first thermoplastic material and a sheath that encircles the core and is made of a second thermoplastic material that differs from the first thermoplastic material. It is contemplated that the cushion 50 may include a combination of monofilaments and filaments that are made of multiple materials and are not monofilaments.

Filaments 52 that are randomly looped, bent, looped, curled, or entangled are bonded together where one filament 52 contacts another filament 52, thereby resulting in a lightweight, air permeable cushion (e.g., cushion 32 and/or 42) or mesh structure having openings or voids between the filaments 52. An example of a manufacturing system 60 of making a cushion or filament mesh structure is shown in Figure 2. In this example, the manufacturing system 60 includes a material supply 70, an extruder 72, and a funnel 74. The manufacturing system 60 also includes a cooling tank 76 and a material handling subsystem 78.

Referring to Figure 3A, an exploded view of a portion of the seat assembly 10 is shown that includes an example of the cushion 50 and an example of a trim cover 100. The trim cover 100 may be made from a cloth, textile, fabric material. The trim cover 100 may also referred to as a sheet or cloth cover. The cushion 50 comprises the filament mesh structure 90. In Figure 3A, the cushion 50 is illustrated without depicting individual filaments 52 of the filament mesh structure 90 for clarity. In some configurations, the cushion 50 has a contoured exterior side 110. The contoured exterior side 110 may have a partially or completely nonplanar profile and may include one or more curved surfaces or curved regions. In some configurations, the contoured exterior side 110 is concave or partially concave. The contoured exterior side 110 faces toward the trim cover 100. Moreover, the contoured exterior side 110 may face toward a seat occupant. The contoured exterior side 110 may contact a portion of the trim cover 100 in one or more regions.

The trim cover 100 is generically designated with reference number 100 for convenience in reference. It is to be understood that the trim cover 100 may be the trim cover 34 of the seat bottom 20 or the trim cover 44 of the seat back 22 as previously described. A portion of the trim cover 100 is shown in Figure 3A to make other features in this figure more visible. The trim cover 100 is disposed over the cushion 50 comprising the filament mesh structure 90 and may generally follow the curvature or contour of the cushion 50 when secured thereto. The trim cover 100 and the cushion may collectively form a manufactured product such as the vehicle seat bottom 20 or the vehicle seat back 22.

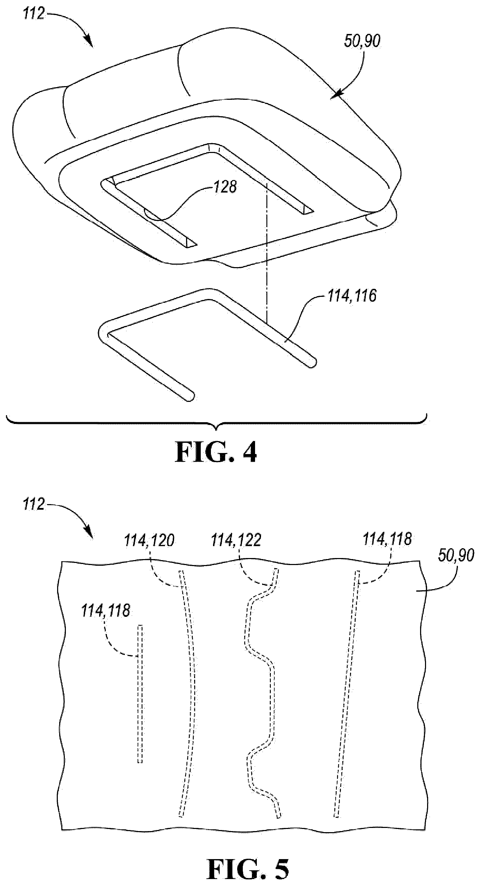

Referring to Figures 4-7, a product 112 (e.g., the seat assembly 10, seat bottom 20, seat back 22, or other subcomponents of the seat assembly 10) is illustrated. The product 112 includes the mesh member or filament mesh structure 90 that comprises the cushion 50. The product 112 may also include the trim cover 100 or portions of the trim cover 100. The product 112 further includes a structural support or structural framework 114 that is embedded into the filament mesh structure 90. The structural framework 114 comprise one or more cords, coated wire cords, bent wires, rods, bars, etc. For example, the structural support may comprise one or more U-shaped bent cords, wires, rods, or bars 116 (e.g., Figure 4), one or more straight cords, wires, rods, or bars 118 (e.g., Figure 5), one or more curved, arced, or bowed cords, wires, rods, or bars 120 (e.g., Figure 5), one or more wave-shaped cords, wires, rods, or bars 122 (e.g., Figure 5), etc. The structural framework 114 is made from a material that has a stiffness that is greater than a stiffness of the filament mesh structure 90. This increases the overall structural integrity of the product 112. For example, the structural support may be made from a sufficiently rigid material such as plastic polyethylene (e.g., linear low-density polyethylene, low-density polyethylene, high-density polyethylene, etc.), other elastic polymers (e.g., thermoplastic polyester elastomer, thermoplastic polyurethane, thermoplastic vulcanizates, etc.), the same material as the filament mesh structure 90, or a metallic material (e.g., steel, brass, copper, aluminum, aluminum alloy, etc.).

The structural framework 114 further operates to provide one or more attachment points for the trim cover 100. More specifically, the trim cover 100 may be disposed over an exterior of the filament mesh structure 90 and anchored to the structural framework 114. Therefore, the structural framework 114, or the cords, wires, rods, or bars comprising the structural framework 114, may also be referred to as one or more anchors.

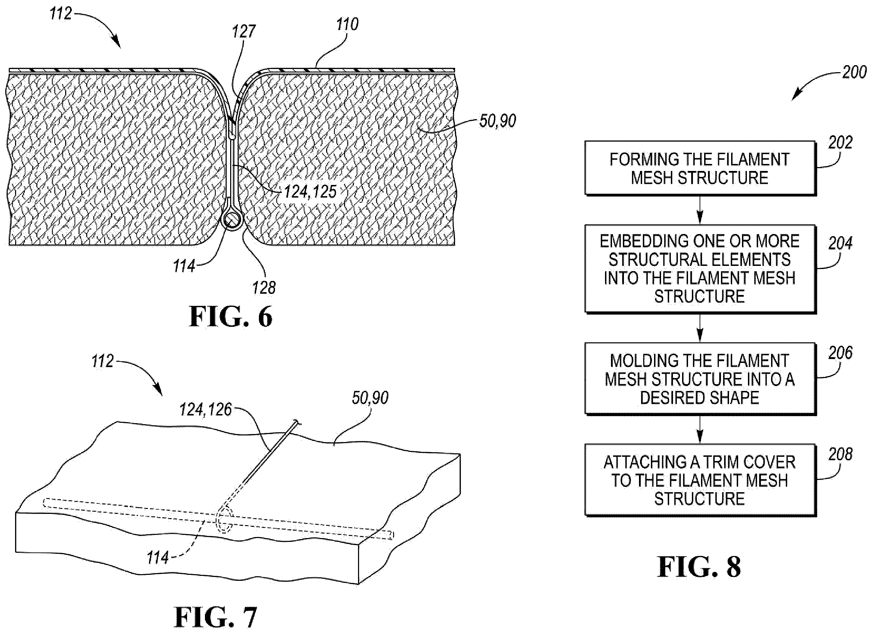

One or more connectors 124 may extend from the trim cover 100, through slots, slits, or openings 127 cut into and defined by the filament mesh structure 90 and engage the structural framework 114 to anchor the trim cover 100 to the structural framework 114. The one or more connectors 124 may comprise Duon^{®} tie-downs, typar/beaded Duon^{®} connectors 125 (e.g., Figure 6), bungee cords, other elastic cords, non-elastic cords, clips, hog rings 126 (e.g., Figure 7), etc.

The structural framework 114, or the cords, wires, rods, or bars comprising the structural framework 114, may be attached to the filament mesh structure 90 via overmolding the filaments 52 onto the structural framework 114. Alternatively, the structural framework 114, or the cords, wires, rods, or bars comprising the structural framework 114, may be disposed within slots, slits, or openings 128 cut into and defined by the filament mesh structure 90. A molding or overmolding process may occur after positioning the structural framework 114, or the cords, wires, rods, or bars comprising the structural framework 114, within the slots, slits, or openings 128. Such a molding process or overmolding process may include forming the filament mesh structure 90 into a final shape (e.g., the final shape of the cushion 50) or may include depositing additional filaments 52 or other material into the slots, slits, or openings 128 and over the structural framework 114 after the structural framework 114 has been placed into the slots, slits, or openings 128. The slots, slits, or openings 128 defined by the filament mesh structure 90 may be disposed on an opposing side of the filament mesh structure 90 relative to the trim cover 100.

Referring to Figure 8, a flowchart of a method 200 for producing a portion of the seat assembly 10, including the filament mesh structure 90, the structural framework 114, and the trim cover 100, is illustrated. The method 200 begins at block 202 where the filament mesh structure 90 is formed. The filament mesh structure 90 may be formed according to the process illustrated in Figure 2 and described herein.

Next, the method 200 moves on to block 204 where the structural framework 114, or the one or more structural cords, structural wires, structural rods, or structural bars comprising the structural framework 114, are embedded into the filament mesh structure 90. The structural framework 114 may be embedded into the filament mesh structure 90 via overmolding the filaments 52 onto the structural framework 114 or via disposing or inserting the structural framework 114 into the slots, slits, or openings 128 cut into and defined by the filament mesh structure 90.

In the event the structural framework 114 is embedded into the filament mesh structure 90 via disposing or inserting the structural framework 114 into the slots, slits, or openings 128 defined by the filament mesh structure 90, the method 200 may include an additional step that includes forming (e.g., cutting) the slots, slits, or openings 128 along a bottom of the filament mesh structure 90 (e.g., on an opposing side of the filament mesh structure 90 relative to the trim cover 100). Such an additional step may occur after the step at block 202 but before the step at block 204. The slots, slits, or openings 127 may also be formed during such an addition step or during a separate step.

The method 200 may include a further additional step after block 204 where a molding process or an overmolding process is utilized to deposit additional filaments 52 or other material into the slots, slits, or openings 128 and over the structural framework 114 once the structural framework 114 has been placed into the slots, slits, or openings 128. Such a molding or overmolding process may be a separate step or may part of the step occurring at the next block (i.e., block 206). At block 206, the filament mesh structure 90 is molded into a desired shape (e.g., the final shape of the cushion 50). The step at block 206 may occur subsequently to the step at block 204 and prior to the step at block 208.

The method 200 next moves on to block 208 where the trim cover 100 is attached the filament mesh structure 90. More specifically, the trim cover 100 may be attached to an exterior or exterior surface of the filament mesh structure 90. Attaching the trim cover to the filament mesh structure 90 may comprise anchoring the trim cover 100 to the structural framework 114, or the one or more structural cords, structural wires, structural rods, or structural bars comprising the structural framework 114. Anchoring the trim cover 100 to the structural framework 114, or the one or more structural cords, structural wires, structural rods, or structural bars comprising the structural framework 114, may comprise attaching the trim cover 100 to the structural framework 114 via the one or more connectors 124. The one or more connectors 124 may extend from the trim cover 100, through the slots, slits, or openings 127 defined by or cut into the filament mesh structure 90, and engage the structural framework 114, or the one or more structural cords, structural wires, structural rods, or structural bars comprising the structural framework 114.

It should be understood that the flowchart in Figure 8 is for illustrative purposes only and that the method 200 should not be construed as limited to the flowchart in Figure 8. Some of the steps of the method 200 may be rearranged while others may be omitted entirely.

Clause 1. A product comprising: a mesh member, the mesh member comprising a set of filaments of polymeric material, wherein at least two members of the set of filaments are looped and bonded to each other; and a structural framework embedded within the mesh member, wherein a stiffness of the structural framework is greater than a stiffness of the mesh member.

Clause 2. The product of clause 1 further comprising a trim cover disposed over an exterior of the mesh member and anchored to the structural framework.

Clause 3. The product of clause 2 further comprising a connector, wherein (i) the connector extends from the trim cover, (ii) through an opening defined by the mesh member, and (iii) engages the structural framework to anchor the trim cover to the structural framework.

Clause 4. The product of clauses 2 to 3, wherein the trim cover is attached to the structural framework via clips or hog rings.

Clause 5. The product of clauses 1 to 3, wherein the structural framework is attached to the filaments via overmolding the filaments onto the structural framework.

Clause 6. The product of clauses 1 to 5, wherein the structural framework is disposed within an opening defined by the mesh member.

Clause 7. The product of clauses 1 to 6, wherein the opening defined by the mesh member is disposed on an opposing side of the mesh member relative to a trim cover.

Clause 8. The product of clauses 1 to 7, wherein the product is a vehicle seat bottom.

Clause 9. The product of clauses 1 to 7, wherein the product is a vehicle seat back.

Clause 10. A method comprising: forming a mesh member, the mesh member comprising a set of filaments of polymeric material, wherein at least two members of the set of filaments are looped and bonded to each other; and embedding one or more structural rods into the mesh member, wherein a stiffness of the one or more structural rods is greater than a stiffness of the mesh member.

Clause 11. The method of clause 10 further comprising attaching a trim cover to an exterior of the mesh member.

Clause 12. The method of clauses 10 to 11, wherein attaching a trim cover to an exterior of the mesh member comprises anchoring the trim cover to the one or more structural.

Clause 13. The method of clause 12, wherein anchoring the trim cover to the one or more structural rods comprises attaching the trim cover to the one or more structural rods via a connector that extends from trim cover, through an opening defined by the mesh member, and engages the one or more structural rods.

Clause 14. The method of clauses 10 to 13 further comprising forming an opening along a bottom of the mesh member, wherein embedding the one or more structural rods into the mesh member comprises inserting the one or more structural rods into the opening.

Clause 15. The method of clauses 10 to 14 further comprising molding the mesh member into a desired shape subsequently to embedding one or more structural rods into the mesh member.

Clause 16. A method comprising: forming a mesh member, the mesh member comprising a set of filaments of polymeric material, wherein at least two members of the set of filaments are looped and bonded to each other; and attaching a trim cover to the mesh member via securing the trim cover to one or more anchors embedded within the mesh member.

Clause 17. The method of clause 16, wherein attaching the trim cover to the one or more anchors comprises attaching the trim cover to the one or more anchors via a connector that extends from the trim cover, through an opening defined by the mesh member, and engages the one or more anchors.

Clause 18. The method of clauses 16 to 17 further comprising embedding the one or more anchors into the mesh member prior to attaching the trim cover to the mesh member.

Clause 19. The method of clauses 16 to18 further comprising molding the mesh member into a desired shape subsequently to embedding one or more anchors into the mesh member but prior to attaching the trim cover to the mesh member.

Clause 20. The method of clause 16 to 19 further comprising forming an opening along a bottom of the mesh member, wherein embedding the one or more anchors into the mesh member comprises inserting the one or more anchors into the opening.

It should be understood that the designations of first, second, third, fourth, etc. for any component, state, or condition described herein may be rearranged in the claims so that they are in chronological order with respect to the claims. Furthermore, it should be understood that any component, state, or condition described herein that does not have a numerical designation may be given a designation of first, second, third, fourth, etc. in the claims if one or more of the specific component, state, or condition are claimed.

While exemplary embodiments are described above, it is not intended that these embodiments describe all possible forms according to the disclosure. In that regard, the words used in the specification are words of description rather than limitation, and it is understood that various changes may be made without departing from the spirit and scope of the disclosure. Additionally, the features of various implementing embodiments may be combined to form further embodiments according to the disclosure.

## Claims

1. A product comprising:
a mesh member, the mesh member comprising a set of filaments of polymeric material, wherein at least two members of the set of filaments are looped and bonded to each other; and
a structural framework embedded within the mesh member, wherein a stiffness of the structural framework is greater than a stiffness of the mesh member.

2. The product of claim 1 further comprising a trim cover disposed over an exterior of the mesh member and anchored to the structural framework.

3. The product of claim 2 further comprising a connector, wherein (i) the connector extends from the trim cover, (ii) through an opening defined by the mesh member, and (iii) engages the structural framework to anchor the trim cover to the structural framework.

4. The product of claim 2 or 3, wherein the trim cover is attached to the structural framework via clips or hog rings.

5. The product of any of the preceding claims, wherein the structural framework is attached to the filaments via overmolding the filaments onto the structural framework.

6. The product of any of the preceding claims, wherein the structural framework is disposed within an opening defined by the mesh member,
wherein preferably the opening defined by the mesh member is disposed on an opposing side of the mesh member relative to a trim cover.

7. The product of any of the preceding claims, wherein the product is a vehicle seat bottom,
or wherein the product is a vehicle seat back.

8. A method comprising:
forming a mesh member, the mesh member comprising a set of filaments of polymeric material, wherein at least two members of the set of filaments are looped and bonded to each other; and
embedding one or more structural rods into the mesh member, wherein a stiffness of the one or more structural rods is greater than a stiffness of the mesh member.

9. The method of claim 8 further comprising attaching a trim cover to an exterior of the mesh member.

10. The method of claim 9, wherein attaching the trim cover to an exterior of the mesh member comprises anchoring the trim cover to the one or more structural rods,
preferably wherein anchoring the trim cover to the one or more structural rods comprises attaching the trim cover to the one or more structural rods via a connector that extends from trim cover, through an opening defined by the mesh member, and engages the one or more structural rods.

11. The method of any of claims 8 to 10, further comprising forming an opening along a bottom of the mesh member, wherein embedding the one or more structural rods into the mesh member comprises inserting the one or more structural rods into the opening.

12. The method of any of claims 8 to 11, further comprising molding the mesh member into a desired shape subsequently to embedding one or more structural rods into the mesh member.

13. A method comprising:
forming a mesh member, the mesh member comprising a set of filaments of polymeric material, wherein at least two members of the set of filaments are looped and bonded to each other; and
attaching a trim cover to the mesh member via securing the trim cover to one or more anchors embedded within the mesh member.

14. The method of claim 13, wherein attaching the trim cover to the one or more anchors comprises attaching the trim cover to the one or more anchors via a connector that extends from the trim cover, through an opening defined by the mesh member, and engages the one or more anchors.

15. The method of claim 13 or 14, further comprising embedding the one or more anchors into the mesh member prior to attaching the trim cover to the mesh member,
the method preferably further comprising molding the mesh member into a desired shape subsequently to embedding one or more anchors into the mesh member but prior to attaching the trim cover to the mesh member,
and/or the method preferably further comprising forming an opening along a bottom of the mesh member, wherein embedding the one or more anchors into the mesh member comprises inserting the one or more anchors into the opening.
